# EUROPEAN PATENT APPLICATION

(11) **EP 4 553 334 A1**
(43) Date of publication of application: **14.05.2025**
(21) Application number: 24211793.5
(22) Date of filing: 08.11.2024
(51) Int. Cl.: F16D 55/36, F16D 55/38, F16D 55/40, F16D 65/00, F16D 65/12, F16D 69/02, F16D 69/04, F16D 55/00, F16D 65/02

(54) **A FRICTION DISK COMPRISING A WASHER FOR IMPROVED RIVETING OF WEAR LINERS**

(30) Priority: 10.11.2023 US 202318506805
(71) Applicant: Goodrich Corporation, Charlotte, NC 28217-4578 (US)
(72) Inventor: KIRKPATRICK, Christopher T., Pueblo West, 81007 (US)
(74) Representative: Dehns

(57) **Abstract**

A friction disk is provided. The friction disk includes a friction disk core (49), a first wear liner (156a) located over a first surface of the friction disk core, a second wear liner (156b) located over a second first surface of the friction disk core, a washer (174), and a rivet (170). The first wear liner and the second wear liner are coupled to the friction disk core via the rivet. The washer is configured to be positioned at a distal end of the rivet, such that, in response to the distal end of the rivet being upset forming an upset head (410), the upset head pushes against the washer thereby spreading a load of the upset head to at least one of the first wear liner or the second wear liner.

## Description

### FIELD

The present disclosure relates generally to aircraft braking systems and, more specifically, to improved riveting of carbon wear liners to ceramic matrix composite (CMC) cores.

### BACKGROUND

Aircraft brake systems typically employ a series of friction disks that may be forced into contact with one another to stop the aircraft. The brake system generally includes non-rotating friction disks splined to a non-rotating wheel axle interspersed with rotating friction disks splined to the rotating wheel. The friction disk assemblies may comprise replaceable wear liners coupled to a reusable core. As the wear liners wear (i.e., thin), they may become susceptible to warpage.

### SUMMARY

A friction disk is disclosed, in accordance with various embodiments. The friction disk includes a friction disk core, a first wear liner located over a first surface of the friction disk core, a second wear liner located over a second surface of the friction disk core, a washer, and a rivet. The first wear liner and the second wear liner are coupled to the friction disk core via the rivet. The washer is configured to be positioned at a distal end of the rivet, such that, in response to the distal end of the rivet being upset forming an upset head, the upset head pushes against the washer thereby spreading a load of the upset head to at least one of the first wear liner or the second wear liner.

In various embodiments, the washer is a first washer and the friction disk further includes a second washer. In various embodiments, the second washer is configured to be positioned at a proximal end of the rivet adjacent a rivet head of the rivet, such that, in response to the distal end of the rivet being upset and forming the upset head, the rivet head pushes against the second washer thereby spreading a load of the rivet head the other of the first wear liner or the second wear liner.

In various embodiments, the washer is a Belleville washer. In various embodiments, the Belleville washer is installed in an inverted manner so that a frustoconical shape of the Belleville washer conforms to a frustoconical shape of a counterbore of an opening through which the rivet is positioned in order to couple the first wear liner and the second wear liner to the friction disk core.

In various embodiments, the washer is a flat washer. In various embodiments, the flat washer is malleable and configured to form a frustoconical shape of a counterbore of an opening through which the rivet is positioned in order to couple the first wear liner and the second wear liner to the friction disk core.

In various embodiments, the washer has a circumference that is substantially the same as the circumference as a rivet head of the rivet. In various embodiments, the washer has a circumference that is greater than the circumference as a rivet head of the rivet. In various embodiments, the washer is manufactured from a metal or a metal alloy. In various embodiments, the washer is manufactured from stainless steel. In various embodiments, the washer is manufactured from monel. In various embodiments, the washer has a thickness of between 0.015 inches (0.0381 centimeter) and 0.060 inches (0.1524 centimeter).

Also disclosed herein is a multi-disk brake system. The multi-disk brake system includes a plurality of friction disks. Each friction disk of the plurality of friction disks includes a friction disk core, a first wear liner located over a first surface of the friction disk core, a second wear liner located over a second surface of the friction disk core, a washer, and a rivet. The first wear liner and the second wear liner are coupled to the friction disk core via the rivet. The washer is configured to be positioned at a distal end of the rivet, such that, in response to the distal end of the rivet being upset forming an upset head, the upset head pushes against the washer thereby spreading a load of the upset head to at least one of the first wear liner or the second wear liner.

In various embodiments, the washer is a first washer and the friction disk includes a second washer. In various embodiments, the second washer is configured to be positioned at a proximal end of the rivet adjacent a rivet head of the rivet, such that, in response to the distal end of the rivet being upset and forming the upset head, the rivet head pushes against the second washer thereby spreading a load of the rivet head to the other of the first wear liner or the second wear liner.

In various embodiments, the washer is a Belleville washer. In various embodiments, the Belleville washer is installed in an inverted manner so that a frustoconical shape of the Belleville washer conforms to a frustoconical shape of a counterbore of an opening through which the rivet is positioned in order to couple the first wear liner and the second wear liner to the friction disk core.

In various embodiments, the washer is a flat washer. In various embodiments, the flat washer is malleable and configured to form a frustoconical shape of a counterbore of an opening through which the rivet is positioned in order to couple the first wear liner and the second wear liner to the friction disk core.

In various embodiments, the washer has a circumference that is substantially the same as the circumference as a rivet head of the rivet. In various embodiments, the washer has a circumference that is greater than the circumference as a rivet head of the rivet. In various embodiments, the washer is manufactured from a metal or a metal alloy. In various embodiments, the washer is manufactured from stainless steel. In various embodiments, the washer is manufactured from monel.

Also disclosed herein is a friction disk. The friction disk includes a friction disk core, a first wear liner located over a first surface of the friction disk core, a second wear liner located over a second surface of the friction disk core opposite the first surface, a washer, and a rivet. The first wear liner and the second wear liner are coupled to the friction disk core via the rivet. The washer is positioned between an upset head of the rivet and one of the first wear liner or the second wear liner.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosures, however, may best be obtained by referring to the detailed description and claims when considered in connection with the drawing figures, wherein like numerals denote like elements.
FIG. 1 illustrates a multi-disk brake system, in accordance with various embodiments.
FIG. 2A illustrates an exploded view of a rotor having segmented wear liners comprising integrated toque buttons, in accordance with various embodiments.
FIG. 2B illustrates a perspective view of an assembled rotor having segmented wear liners comprising integrated toque buttons, in accordance with various embodiments.
FIG. 2C illustrates a cross-section view of a rotor having segmented wear liners comprising integrated torque buttons, in accordance with various embodiments.
FIG. 3 illustrates a perspective view of an assembled stator having segmented wear liners comprising integrated toque buttons, in accordance with various embodiments.
FIGS. 4A and 4B illustrate a cross-sectional view of an assembled rotor in accordance with various embodiments.

### DETAILED DESCRIPTION

The detailed description of embodiments herein makes reference to the accompanying drawings, which show embodiments by way of illustration. While these embodiments are described in sufficient detail to enable those skilled in the art to practice the disclosure, it should be understood that other embodiments may be realized and that logical, chemical, and mechanical changes may be made without departing from the spirit and scope of the disclosure. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option. Further, any steps in a method discussed herein may be performed in any suitable order or combination.

In the case of components that rotate about a common axis, a first component that is "radially outward" of a second component means that the first component is positioned at a greater distance away from the common axis than the second component. A first component that is "radially inward" of a second component means that the first component is positioned closer to the common axis than the second component. In the case of components that rotate circumferentially about a common axis, a first component that is radially inward of a second component rotates through a circumferentially shorter path than the second component. As used herein, "distal" refers to the direction outward, or generally, away from a reference component. As used herein, "proximate" refers to a direction inward, or generally, towards the reference component.

Carbon/carbon (C/C) composites and silicon carbide (SiC) based ceramic matrix composites (CMCs) have found use in the aerospace and other industries for fabricating brake stacks and heat sinks. These brake stacks or heat sinks may utilize a core-liner concept (CMC core, C/C disk), i.e. friction disk core. Accordingly, brake assemblies of the present disclosure may include friction disks having a friction disk core with carbon wear liners, referred to simply as wear liners hereafter, coupled to thereto. In various embodiments, the wear liners may be segmented such that each wear liner comprises a plurality of wear liner segments forming a generally annular, or ring, shaped wear liner. Stated differently, the wear liners may be constructed from multiple arcuate segments that jointly form an annular, 360 degree or substantially 360-degree wear liner. As used herein, "substantially 360 degree" means within 5 degrees of 360 degrees. The wear liner segments may be coupled to the friction disk core via a fastener located through a protrusion extending from a non-wear surface of the wear liner segment or via an inner circumferential flange or an outer circumferential flange of the wear liner segment. However, in some instances, the fastener that couples the wear liner or wear liner segments to the friction disk core may present challenges in assembly. In that regard, when a rivet is utilized to couple the wear liner or wear liner segments to the friction disk core, forming the rivet upset head against the wear liner may cause damage to the wear liner, i.e. breaking of wear liner which may then cause the wear liner to be scrapped. Additionally, when removing a used wear liner, the de-riveting process, i.e. removing the rivet fastener, may cause damage to the friction disk core, which is a reusable core. In events where the friction disk core is damaged due to de-riveting, then the friction disk core is scrapped.

Provided herein, according to various embodiments, are system(s) and/or method(s) for improved riveting of wear liners to ceramic matrix composite (CMC) cores. In various embodiments, the fastening process utilizes a first washer between the upset head of the rivet and the wear liner so that the upset head forms against the first washer rather than the wear liner during the riveting process. In various embodiments, the fastening process utilizes a second washer between the rivet head of the rivet and the wear liner so that the rivet head pushes against the second washer rather than the wear liner during the riveting process. In various embodiments, the first washer and the second washer may be Belleville washers. Typically, a Belleville washer is a spring shaped with a frustoconical shape that gives the washer a characteristic spring, when compressed. However, in various embodiments, the Belleville washer is inverted so the frustoconical shape forms to a frustoconical shape of a counterbore of openings through which the wear liner is coupled to the friction disk core. In various embodiments, the first washer and the second washer may be a flat washer. In various embodiments, the flat washer is a malleable washer that, in response to being compressed during the riveting process, conforms to the frustoconical shape of the counterbore of the opening through which the wear liner is coupled to the friction disk core. In various embodiments, the first washer and the second washer have a circumference that is substantially the same as the circumference as the rivet head. In various embodiments, the first washer and the second washer may have a circumference that is greater than the circumference as the rivet head. In various embodiments, the first washer and the second washer may be manufactured from stainless steel, monel, or other metal or metal alloy. In various embodiments, the thickness of the first washer and the second washer may be between 0.015 inches (0.0381 centimeter) and 0.060 inches (0. 1524 centimeter). In various embodiments, the thickness of the first washer and the second washer may be between 0.020 inches (0.0508 centimeter) and 0.030 inches (0.0762 centimeter). In various embodiments, the thickness of the first washer and the second washer may be between 0.022 inches (0.05588 centimeter) and 0.028 inches (0.07112 centimeter). In various embodiments, the use of the first washer and/or the second washer spreads the load of the rivet head and the upset head so as to prevent or reduce damage to the wear liner during riveting and/or de-riveting.

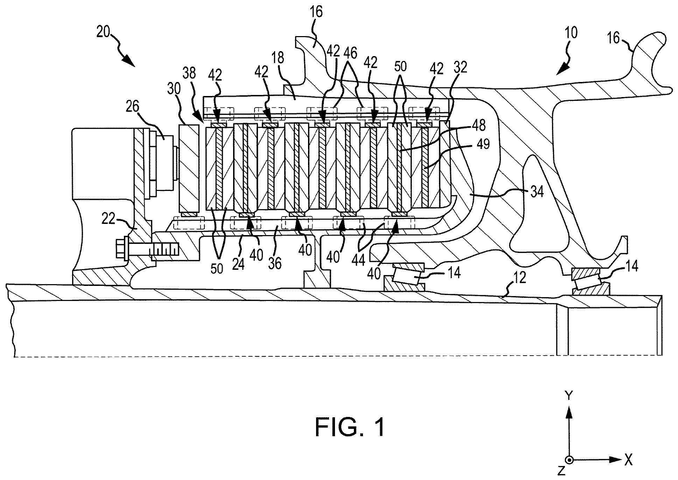

Referring to FIG. 1, in accordance with various embodiments, a multi-disk brake system 20 is illustrated. The system may include a wheel 10 supported for rotation around axle 12 by bearings 14. Axle 12 defines an axis of multi-disk brake system 20 and the various components thereof. Any reference to the terms axis and axial may include an axis of rotation defined by axle 12 or a dimension parallel to such axis. Wheel 10 includes rims 16 for supporting a tire, and a series of axially extending rotor splines 18 (one shown). Rotation of wheel 10 is modulated by multi-disk brake system 20. Multi-disk brake system 20 includes torque flange 22, torque tube 24, a plurality of pistons 26 (one shown), pressure plate 30, and end plate 32. Torque tube 24 may be an elongated annular structure that includes reaction plate 34 and a series of axially extending stator splines 36 (one shown). Reaction plate 34 and stator splines 36 may be integral with torque tube 24, as shown in FIG. 1, or attached as separate components.

Multi-disk brake system 20 also includes a plurality of friction disks 38. The plurality of friction disks 38 includes at least one non-rotatable friction disk (stator) 40, and at least one rotatable friction disk (rotor) 42. Stators 40 may comprise a friction disk core (stator core) 48 and wear liners 50 located over opposing sides of the stator core 48. Rotors 42 may comprise a friction disk core (rotor core) 49 and wear liners 50 located over opposing sides of the rotor core 49. Each friction disk 38 includes an attachment structure. For example, stators 40 include a plurality of stator lugs 44 at circumferentially spaced positions around an inner circumference of stators 40, and rotors 42 include a plurality of rotor lugs 46 at circumferentially spaced positions around an outer circumference of rotors 42.

In various embodiments, pressure plate 30, end plate 32, and wear liners 50 are each annular structures made at least partially from a carbon composite material. In various embodiments, friction disk cores 48, 49 and wear liners 50 may comprise different materials. For example, friction disk cores 48, 49 may comprise a first material, for example, steel for titanium, and wear liners 50 may comprise a second material, for example, a carbon composite material. In various embodiments, friction disk cores 48, 49 and wear liners 50 may comprise the same material. For example, friction disk cores 48, 49 and wear liners 50 may both comprise a carbon composite material. The material of friction disk cores 48, 49 may be selected for its structural properties, thermal conductivity, heat capacity, and/or oxidation resistance properties, and the material of wear liners 50 may be selected for its wear resistance and/or frictional properties. Thus, friction disks 38 may experience the structural advantages of friction disk cores 48, 49 and the frictional advantages of wear liners 50.

Torque flange 22 is mounted to axle 12. Torque tube 24 is bolted to torque flange 22 such that reaction plate 34 is near an axial center of wheel 10. End plate 32 is connected to a surface of reaction plate 34 facing axially away from the axial center of wheel 10. Thus, end plate 32 is non-rotatable by virtue of its connection to torque tube 24. Stator splines 36 may support pressure plate 30 such that pressure plate 30 is also non-rotatable. Stator splines 36 also support stators 40. Stators 40 engage stator splines 36 with gaps formed between stator lugs 44. Similarly, rotors 42 engage rotor splines 18 with gaps formed between rotor lugs 46. Thus, rotors 42 are rotatable by virtue of their engagement with rotor splines 18 of wheel 10.

In various embodiments, rotors 42 are arranged with end plate 32 on one end, pressure plate 30 on the other end, and stators 40 interleaved such that rotors 42 are adjacent to non-rotatable friction components. Pistons 26 are connected to torque flange 22 at circumferentially spaced positions around torque flange 22. Pistons 26 face axially toward wheel 10 and contact a side of pressure plate 30 opposite rotors 42. Pistons 26 may be powered electrically, hydraulically, or pneumatically. In response to actuation of pistons 26, a force towards reaction plate 34 is exerted on friction disks 38 such that rotors 42 and stators 40 are pressed together between pressure plate 30 and end plate 32.

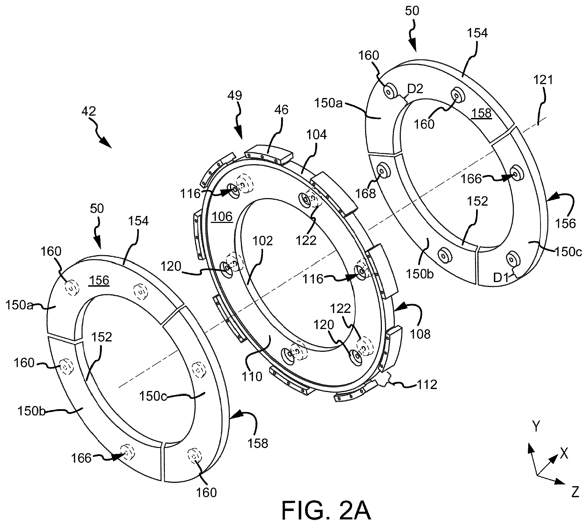

Referring to FIG. 2A, in accordance with various embodiments, an exploded view of a rotor 42 having a segmented wear liner with integrated fasteners is illustrated. Rotor 42 may comprise rotor core 49 and two wear liners 50 located over opposing surfaces of rotor core 49. Wear liners 50 may be segmented such that each wear liner 50 comprises a plurality of wear liner segments (e.g., first wear liner segment 150a, second wear liner segment 150b, and third wear liner segment 150c). Wear liner segments 150a, 150b, and 150c are located circumferentially adjacent one another over surfaces 106 and 108 of rotor core 49. Wear liner segments 150a, 150b, and 150c may jointly form a generally annular or ring-shaped structure (i.e., wear liner 50). Stated differently, wear liner 50 may be constructed from multiple arcuate segments that jointly extend substantially 360 degrees around an axis 121. As used herein, "substantially 360 degrees" means within 5 degrees of 360 degrees. In this regard, in various embodiments, wear liner segments 150a, 150b, and 150c may be coupled to rotor core 49 with a small gap or space between adjacent segments to allow for thermal expansion of wear liner segments 150a, 150b, and 150c and/or rotor core 49.

While wear liners 50 are shown including three wear liner segments (i.e., 150a, 150b, and 150c), it should be understood that wear liners 50 as disclosed herein may comprise any number of wear liner segments. In various embodiments, wear liners 50 may each comprise between two wear liner segments and eight wear liner segments. In various embodiments, wear liners 50 may each comprise between three wear liner segments and six wear liner segments. The wear liner segments may be approximately equal in inner and outer circumferential length. As used herein, "approximately equal" means ± 3.0% of the total outer circumferential length of the wear liner.

Wear liners 50, including wear liner segments 150a, 150b, and 150c, comprise an inner circumferential surface 152 and an outer circumferential surface 154. Wear liners 50, including wear liner segments 150a, 150b, and 150c, further comprise a wear liner 156 and a non-wear surface 158 opposite wear liner 156. Wear liner 156 extends from inner circumferential surface 152 to outer circumferential surface 154 and is oriented away from rotor core 49. Non-wear surface 158 extends from inner circumferential surface 152 to outer circumferential surface 154 and is oriented toward rotor core 49. In various embodiments, wear liner segments 150a, 150b, and 150c each include at least one protrusion 160. Protrusions 160 may extend (i.e., protrude) from non-wear surface 158 in an axial direction toward rotor core 49. Protrusions 160 may comprise a generally cylindrical or frustoconical shape.

Protrusions 160 may be located a distance D1 from outer circumferential surface 154 and a distance D2 from inner circumferential surface 152. In various embodiments, distance D1 may be about equal to distance D2. As used herein "about equal" means ±0.05 inches (±0.05 cm). In various embodiments, distance D1 may be greater than distance D2. In various embodiments, distance D2 may be greater than distance D1. The location and configuration of protrusions 160 may be selected to minimize vibration.

Rotor core 49 may comprise a rotor spine 110 and rotor lugs 46. Rotor core 49 may engage rotor splines 18 (FIG. 1) in rotor gaps 112 formed between rotor lugs 46. In this regard, rotor 42 may be rotatable by virtue of the engagement between rotor lugs 46 and rotor splines 18 of wheel 10 (FIG. 1). Rotor core 49 further comprises a first surface 106 and a second surface 108 opposite first surface 106. First surface 106 and second surface 108 may extend along rotor spine 110 between an inner circumferential surface 102 and outer circumferential surface 104 of rotor core 49. A plurality of first depressions 120 may be formed in, and defined by, first surface 106. A plurality of second depressions 122 may be formed in, and defined by, second surface 108. First depressions 120 may be axially aligned with second depressions 122. First depressions 120 and second depressions 122 may each be formed partially through rotor core 49 such that a portion of rotor core 49 remains between a bottom, or axially inward, surface of first depressions 120 and a bottom, or axially inward, surface of second depressions 122.

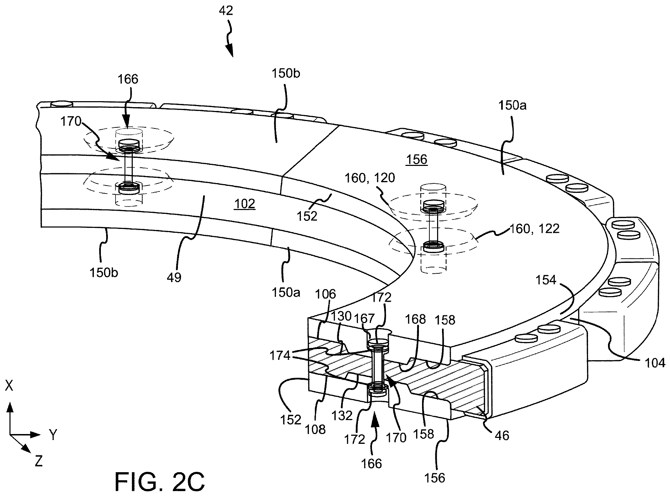

First depressions 120 and second depressions 122 may comprise a generally cylindrical or frustoconical shape. The shape of first depressions 120 and second depressions 122 may complement the shape of protrusions 160. An opening 166 may be formed through protrusions 160. Openings 166 may extend completely through wear liners 50 such that openings 166 extend from wear liner 156 to a surface 168 of protrusion 160 opposite wear liner 156. An opening 116 may be formed through first depressions 120 and second depressions 122. Openings 116 may extend completely through rotor core 49. With momentary reference to FIG. 2C, openings 116 may extend from the bottom, or axially inward, surface 130 of first depressions 120 to the bottom, or axially inward, surface 132 of second depressions 122. Openings 116 may be aligned with openings 166 and may be configured to receive a fastener for securing wear liners 50 to rotor core 49.

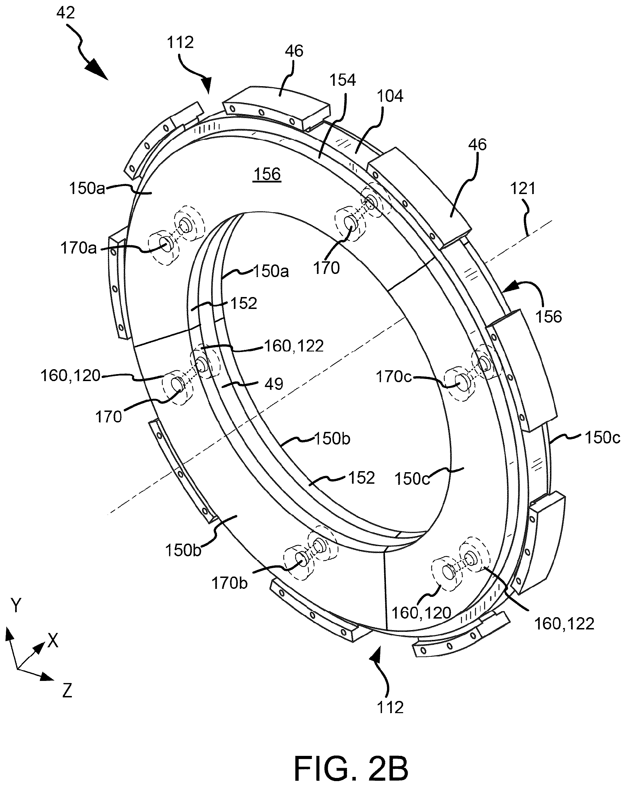

Referring to FIG. 2B, in accordance with various embodiments, an assembled rotor 42 is illustrated. With combined reference to FIG. 2A and FIG. 2B, protrusions 160 may be located and/or positioned within first depressions 120 and second depressions 122. In this regard, the protrusions 160 adjacent to first surface 106 of rotor core 49 may be positioned within first depressions 120, and the protrusions 160 adjacent to second surface 108 of rotor core 49 may be positioned with second depressions 122. Fasteners 170 may couple or otherwise secure wear liners 50 to rotor core 49. Fasteners 170 may comprise a rivet, bolt, pin, screw, or other suitable securement mechanism. Fasteners 170 may be located through protrusions 160. Fasteners 170 extend between opposing wear liner segments. For example, fastener 170a extends between opposing wear liner segments 150a. Fastener 170b extends between opposing wear liner segments 150b. Fastener 170c extends between opposing wear liner segments 150c. In this regard, fasteners 170 may couple wear liner segments 150a, 150b, and 150c to rotor core 49.

Referring to FIG. 2C, in accordance with various embodiments, a cutaway view of assembled rotor 42 is illustrated. Openings 166 may include a counterbore 167 configured to receive fastener 170. In various embodiments, a washer 174 may be located between each head 172 and a radially inward portion of the counterbore 167 of the openings 166. Heads 172 of fasteners 170 may be recessed with respect to wear liner 156. Locating fasteners 170 through protrusion 160 may allow the heads 172 of fasteners 170 to be located a greater distance from wear liner 156. In various embodiments, after wear liners 50 have been fully worn (i.e., after wear liners 50 have been worn below a suitable operational thickness), heads 172 of fasteners 170 may remain recessed with respect to wear liner 156.

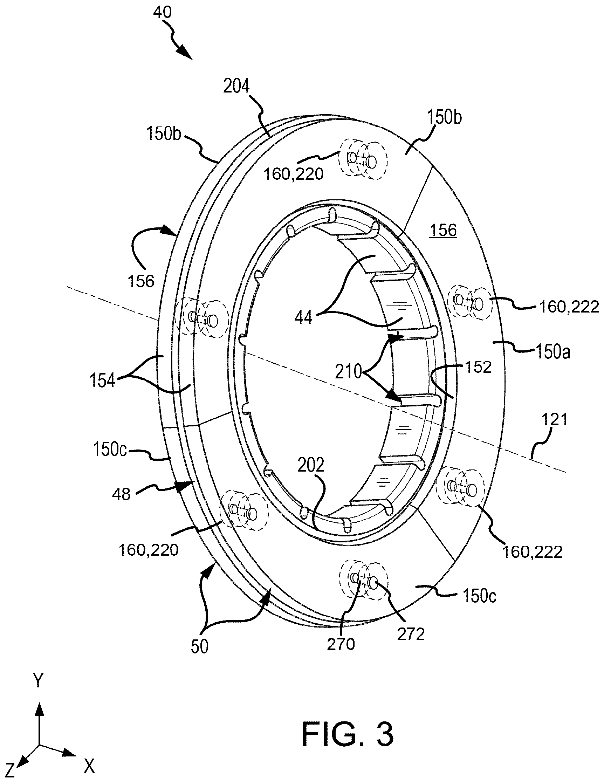

Referring to FIG. 3, in accordance with various embodiments, an assembled stator 40 comprising wear liner segments having integrated fasteners is illustrated. Stator 40 may comprise a stator core 48 and wear liners 50. Stator core 48 may comprise stator lugs 44. Stator lugs 44 may be located along an inner circumferential surface 202. Stator gaps 210 may be located between stator lugs 44. Stator gaps 210 may be positioned to align with stator splines 36 (FIG. 1). The engagement between the stator splines 36 and stator lugs 44 may prevent stator core 48 from rotating in response to a torque being applied to stator 40 during braking. Stator core 48 may include opposing first and second surfaces extending between inner circumferential surface 202 and an outer circumferential surface 204.

A plurality of first depressions 220 may be formed in the first surface of stator core 48. A plurality of second depressions 222 may be formed in the second surface of stator core 48. First depressions 220 may axially aligned with second depressions 222. First depressions 220 and second depressions 222 may each be formed partially through stator core 48 such that a portion of stator core 48 remains between a bottom, or axially inward, surface of first depressions 220 and a bottom, or axially inward, surface of second depressions 222. Protrusions 160 may be located and/or positioned in first depressions 220 and second depressions 222.

Wear liners 50, including wear liner segments 150a, 150b, and 150c, may be coupled to stator core 48 with wear liner 156 oriented away from stator core 48 and protrusions 160 oriented toward stator core 48. Fasteners 270, similar to fasteners 170 in FIG. 2B, may be located through protrusion 160 and may couple wear liner segments 150a, 150b, and 150c to stator core 48.

In various embodiments, wear liner segments 150a, 150b, and 150c, may have an identical or substantially similar configuration. In this regard, the configuration of depressions 120, 122 in rotor core 49 may be identical or substantially similar to the configuration of depressions 220, 222 in stator core 48 such that wear liner segments 150a, 150b, and 150c may be compatible with both (i.e., interchangeable between) rotor core 49 and stator core 48.

During braking, the wear liner 156 of rotor 42 wear liners 50 may contact the wear liner 156 of stator 40 wear liners 50, which may create friction to decelerate the aircraft. In various embodiments, wear liners 50 may be replaceable, such that after wear liners 50 have been worn below a suitable operational thickness, wear liners 50 may be removed from rotor core 49 and/or stator core 48 and replaced with new or remanufactured wear liners 50. Wear liners 50 formed from a plurality of discrete segments tend to be less susceptible to warpage as compared to unibody wear liners of similar thickness. In this regard, wear liners 50 being segmented may allow a greater volume of wear liners 50 to be consumed (i.e. used, worn) prior to replacement.

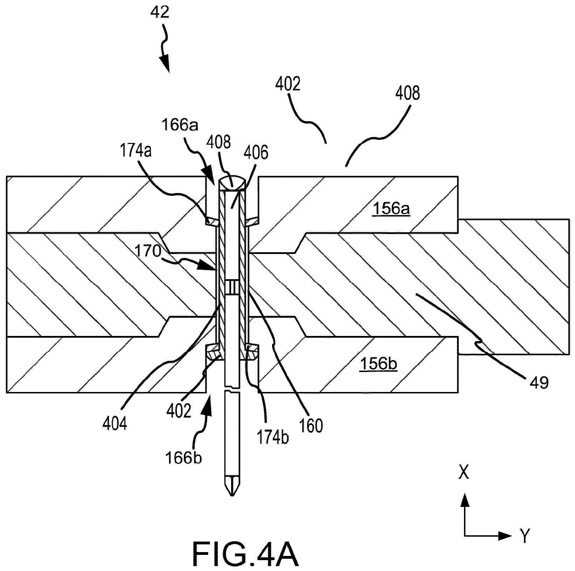

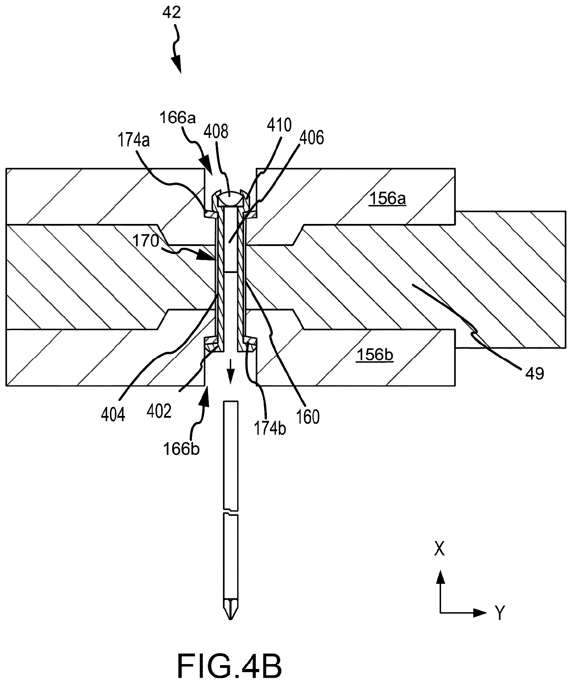

Referring now to FIGS. 4A and 4B, in accordance with various embodiments, a cross-sectional view of an assembled rotor 42 is illustrated. As discussed previously, assembled rotor 42 includes friction disk core 49 located between a first wear surfaces 156a and a second wear liner 156b. In various embodiments, the first wear liner 156a and the second wear liner 156b may be coupled to the friction disk core 49 via a plurality of fasteners 170 (only one fastener 170 is illustrated in FIGS. 4A and 4B) fitted within openings 166a and 166b. In various embodiments, the fastener 170 may be a rivet. In various embodiments, the rivet 170 includes a rivet head 402, a rivet body 404, a mandrel 406, and a mandrel head 408 formed on a distal end of the mandrel 406. In various embodiments, the rivet body 404 includes a hollow shaft in a longitudinal direction such that the mandrel 406 fits within the hollow shaft of the rivet body 404. In various embodiments, when attaching the first wear liner 156a and the second wear liner 156b to the friction disk core 49, a second washer 174b is positioned over the rivet body 404 such that the second washer contacts and is adjacent a bottom side of the rivet head 402. In various embodiments, the rivet 170 is then positioned within the opening 166b and protrusion 160 such that the mandrel head 408 protrudes through to opening 166a. In various embodiments, a first washer 174a is then positioned over the mandrel head 408 and the rivet body 404.

In various embodiments, in response to a rivet tool, i.e. a riveter or rivet gun, being coupled to the proximal end of the mandrel 406, the rivet tool provides a series of high-impulse forces that pull the mandrel 406 and mandrel head 408 in a negative x-direction through the rivet body 404 and upsets the distal end of the rivet body 404 thereby forming an upset head 410 around mandrel head 408 and breaking off the mandrel 406. In various embodiments, the use of the first washer 174a and the second washer 174b spreads the load of the upset head 410 and the rivet head 402, respectively, so as to prevent or reduce damage to the wear liner 156a and the wear liner 156b during riveting and/or de-riveting. While in FIGS. 4A and 4B, the first washer 174a and the second washer 174b are utilized, in various embodiments, only the first washer 174a may be utilized between the upset head 410 and the wear liner 156a so that the upset head 410 forms against the first washer 174a rather than the wear liner 156a during the riveting process.

In various embodiments, the first washer 174a and the second washer 174b may be Belleville washers. Typically, a Belleville washer is a spring shaped with a frustoconical shape that gives the washer a characteristic spring, when compressed. However, in various embodiments, the Belleville washer is inverted so the frustoconical shape forms to a frustoconical shape of a counterbore 167 of the openings 166a and 166b through which the first wear liner 156a and the second wear liner 156b are coupled to the friction disk core 49. In various embodiments, the first washer 174a and the second washer 174b may be flat washers. In various embodiments, the flat washers are a malleable washer that, when compressed during the riveting process, forms to the frustoconical shape of the counterbore 167 of the openings 166a and 166b through which the first wear liner 156a and the second wear liner 156b are coupled to the friction disk core 49. In various embodiments, the first washer 174a and the second washer 174b have a circumference that is substantially the same as the circumference as the rivet head 402. In various embodiments, the first washer 174a and the second washer 174b may have a circumference that is greater than the circumference as the rivet head 402. In various embodiments, the first washer 174a and the second washer 174b may be manufactured from stainless steel, monel, or other metal or metal alloy. In various embodiments, the thickness of the first washer 174a and the second washer 174b may be between 0.015 inches (0.0381 centimeter) and 0.060 inches (0. 1524 centimeter). In various embodiments, the thickness of the first washer 174a and the second washer 174b may be between 0.020 inches (0.0508 centimeter) and 0.030 inches (0.0762 centimeter). In various embodiments, the thickness of the first washer 174a and the second washer 174b may be between 0.022 inches (0.05588 centimeter) and 0.028 inches (0.07112 centimeter).

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures. The scope of the disclosures is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A friction disk comprising:
a friction disk core (49);
a first wear liner (156a) located over a first surface of the friction disk core;
a second wear liner (156b) located over a second surface of the friction disk core;
a washer (174); and
a rivet (170), wherein the first wear liner and the second wear liner are coupled to the friction disk core via the rivet and wherein the washer is configured to be positioned at a distal end of the rivet, such that, in response to the distal end of the rivet being upset forming an upset head (410), the upset head pushes against the washer thereby spreading a load of the upset head to at least one of the first wear liner or the second wear liner.

2. The friction disk of claim 1, wherein the washer is a first washer (174a) and further comprising:
a second washer (174b), wherein the second washer is configured to be positioned at a proximal end of the rivet adjacent a rivet head of the rivet, such that, in response to the distal end of the rivet being upset and forming the upset head, the rivet head pushes against the second washer thereby spreading a load of the rivet head to the other of the first wear liner or the second wear liner.

3. The friction disk of claim 1 or 2, wherein the washer is a Belleville washer and wherein the Belleville washer is installed in an inverted manner so that a frustoconical shape of the Belleville washer conforms to a frustoconical shape of a counterbore of an opening through which the rivet is positioned in order to couple the first wear liner and the second wear liner to the friction disk core.

4. The friction disk of claim 1 or 2, wherein the washer is a flat washer and wherein the flat washer is malleable and configured to form a frustoconical shape of a counterbore of an opening through which the rivet is positioned in order to couple the first wear liner and the second wear liner to the friction disk core.

5. The friction disk of any preceding claim, wherein the washer has a circumference that is substantially the same as the circumference of a rivet head of the rivet.

6. The friction disk of any of claims 1 to 4, wherein the washer has a circumference that is greater than the circumference of a rivet head of the rivet.

7. The friction disk of any preceding claim, wherein the washer is manufactured from a metal or a metal alloy.

8. The friction disk of claim 7, wherein the washer is manufactured from stainless steel.

9. The friction disk of claim 7, wherein the washer is manufactured from monel.

10. The friction disk of any preceding claim, wherein the washer has a thickness of between 0.015 inches (0.0381 centimeter) and 0.060 inches (0. 1524 centimeter).

11. A multi-disk brake system comprising:
a plurality of friction disks (38), each friction disk of the plurality of friction disks being a friction disk as claimed in any preceding claim.

12. A friction disk comprising:
a friction disk core (49);
a first wear liner (156a) located over a first surface of the friction disk core;
a second wear liner (156b) located over a second surface of the friction disk core opposite the first surface;
a washer (174); and
a rivet (170), wherein the first wear liner and the second wear liner are coupled to the friction disk core via the rivet and wherein the washer is positioned between an upset head of the rivet and one of the first wear liner or the second wear liner.
